Europäisches Patentamt

European Patent Office

Office européen des brevets

(11) Veröffentlichungsnummer: **0 269 829 B1**

# EUROPÄISCHE PATENTSCHRIFT

(45) Veröffentlichungstag der Patentschrift: **22.05.91**

(51) Int. Cl.⁵: **A01C 15/00**, A01B 73/00

(21) Anmeldenummer: **87115467.0**

(22) Anmeldetag: **22.10.87**

Teilanmeldung 90108024.2 eingereicht am 22/10/87.

(54) **Verteilmaschine, insbesondere Grossflächendüngerstreuer.**

(30) Priorität: 05.11.86 DE 3637708
15.04.87 DE 3712843
03.10.87 DE 3733488

(43) Veröffentlichungstag der Anmeldung:
**08.06.88 Patentblatt 88/23**

(45) Bekanntmachung des Hinweises auf die Patenterteilung:
**22.05.91 Patentblatt 91/21**

(84) Benannte Vertragsstaaten:
**BE DE FR GB IT**

(56) Entgegenhaltungen:
EP-A- 0 157 592      AT-B- 380 764
DE-A- 2 944 944      DE-A- 3 230 489
DE-A- 3 439 590      DE-C- 3 532 752
FR-A- 2 460 438      FR-A- 2 544 162
US-A- 4 128 131

(73) Patentinhaber: **Amazonen-Werke H. Dreyer GmbH & Co. KG**
**Am Amazonenwerk 9-13**
**W-4507 Hasbergen-Gaste(DE)**

(72) Erfinder: **Higgen, Reinhard**
**Gartenstrasse 1**
**W-2872 Hude 1(DE)**
Erfinder: **Reinke, Wilfried**
**August-Hanken-Strasse 69**
**W-2900 Oldenburg(DE)**
Erfinder: **Rostalski, Fritz**
**Fridtjofnansen Strasse 28**
**W-2872 Delmenhorst(DE)**

## Beschreibung

Die Erfindung betrifft eine Verteilmaschine, insbesondere Großflächendüngerstreuer, mit einem Vorratsbehälter gemäß des Patentanspruches 1.

Eine derartige Verteilmaschine ist durch die deutsche Offenlegungsschrift 34 39 590 bekannt geworden. Diese Verteilmaschine ist als Pneumatikdüngerstreuer zum Ausbringen von Dünger vorgesehen. Diese Verteilmaschine ist zum Anbau an oder zum Aufbau auf einen Schlepper vorgesehen. Diese gesamte Maschine ist mittels eines Pendelrahmens pendelnd gegenüber den Anbauelementen aufgehängt. Diese pendelnde Aufhängung der gesamten Verteilmaschine eignet sich nicht für einen Großflächendüngerstreuer, weil dann zu große Massen aufgehängt werden müssen.

Eine als Großflächendüngerstreuer ausgebildete Verteilmaschine ist bereits durch die DE-PS 33 13 892 bekannt geworden. Diese Verteilmaschine ist mit einem Fahrwerk und einem langgestreckten Vorratsbehälter ausgestattet, der sowohl an seinem in Fahrtrichtung gesehenen hinteren und vorderen Ende jeweils eine Austrittsöffnung aufweist. Unterhalb dieser Austrittsöffnungen ist jeweils ein abnehmbares Streuorgan angeordnet, wobei das hintere Streuorgan als Zentrifugalstreuwerk und das vordere als Streuschnecke ausgebildet ist, die sich in Transportstellung seitlich des Vorratsbehälters befindet. Ein im unteren Bereich des Vorratsbehälters angeordnetes, in umkehrbarer Förderrichtung antreibbares Förderorgan dient zum Transport des sich im Vorratsbehälter befindlichen Materials zu der jeweiligen Austrittsöffnung. Hierdurch wird es in besonders vorteilhafter Weise möglich, das auszubringende Material je nach den Einsatzbedingungen entweder mit dem unter der vorderen oder mit dem unter der hinteren Austrittsöffnung angeordneten Streuorgan auszubringen.

Bei den großen Arbeitsbreiten, die sich beispielsweise über einen Bereich von 8 bis 12m erstrecken können, hat sich gezeigt, daß es zu Beschädigungen der Streuschneckenausleger kommen kann, wenn sich diese in Arbeitsstellung befinden. Diese Beschädigungen an den Streuschneckenauslegern sind auf ihre starre Befestigung an dem Rahmen der Verteilmaschine zurückzuführen, da durch diese Befestigungsart sämtliche vom Fahrwerk aufgenommenen Stöße ungedämpft auf die Ausleger übertragen werden. Diese Stöße können derartige Belastungsspitzen aufweisen, so daß es zu Beschädigungen an Bauteilen der Streuschneckenausleger kommen kann.

Der Erfindung liegt daher die Aufgabe zugrunde, bei Verteilmaschinen, insbesondere Großflächendüngerstreuern mit Streuschnecken, insbesondere mit großen Arbeitsbreiten von 8m und mehr eine einfache schwingungsgedämpfte Aufhängung für die Streuschnecke zu schaffen.

Diese Aufgabe wird erfindungsgemäß durch das Kennzeichen des Anspruches 1 gelöst. Infolge dieser Maßnahme wird eine einfache schwingungsgedämpfte Aufhängung für die Streuschnecke geschaffen, so daß während des Streuvorganges durch die Bodenunebenheiten hervorgerufene Erschütterungen des Fahrwerks des Großflächendüngerstreuers nicht als Belastungsspitzen auf die Streuschneckenausleger übertragen werden. Hierdurch werden die Streuschneckenausleger in besonders vorteilhafter Weise vor Beschädigungen geschützt. Weiterhin wird erreicht, daß die Streuschneckenausleger sich in gewissen Grenzen unabhängig gegenüber dem Fahrwerk des Großflächendüngerstreuers bewegen können, so daß die Streuschneckenausleger stets parallel zur Bodenoberfläche geführt werden.

Eine einfache pendelnde Aufhängigkeit der Streuausleger ergibt sich durch den Pendelrahmen, an dem die Streuschneckenausleger angeordnet sind. Somit wird sich eine sehr einfache, kompakte Befestigung der Streuschneckenausleger an dem Rahmen des Großflächendüngerstreuers erreicht. Der Pendelrahmen stellt eine starre Baueinheit dar und ist nur über die Pendelachse mit dem Rahmen der Verteilmaschine verbunden, wodurch die Montage des Pendelrahmens entscheidend vereinfacht wird. Dadurch, daß der Pendelrahmen eine Öffnung aufweist, durch die der Rahmen bzw. die Zugdeichsel des Streuers geführt ist, läßt sich der komplette Pendelrahmen auf einfachste Weise an dem Großflächendüngerstreuer anbauen, wobei der Pendelrahmen um den Rahmen bzw. die Zugdeichsel des Streuers herumgeführt ist. Zur aufrechten Arretierung des gesamten Streuschneckenauslegers ist zwischen der oberen Querstrebe des Pendelrahmens und dem Rahmen des Streuers zumindest ein Abstützelement in / oder entgegen der Fahrtrichtung angeordnet.

Desweiteren ist durch die EP-A 00 85 597 eine Feldspritze mit einem Verteilergestänge bekannt. Die Ausleger des Verteilergestänges sind an einem Pendelrahmen befestigt, der um eine sich oberhalb des Pendelrahmens befindliche in Fahrtrichtung verlaufende Achse pendelnd aufgehängt ist.

Es ist weiterhin in erfindungsgemäßer Weise vorgesehen, daß die Streuschneckenausleger zusätzlich um eine aufrechte Achse schwingend aufgehängt sind. Infolge dieser Maßnahme werden nicht nur in vertikaler Richtung auftretenden Belastungsspitzen gedämpft, sondern auch die in horizontaler Richtung auftretenden Belastungsspitzen.

Außerdem ist erfindungsgemäß vorgesehen, daß zwischen dem Rahmen und der Streuschnecke Dämpfungs- und/oder Federelemente angeordnet sind, und daß die Streuschnecke federnd am Rahmen aufgehängt ist. Hierbei ist es möglich, daß zwischen der Streuschnecke und dem Rahmen Federn, die beispielsweise als Zug- oder Blattfedern ausgebildet sind, angeordnet sind.

Es ist in erfindungsgemäßer Weise vorgesehen, daß die Pendelachse sich oberhalb der Streuschnecke befindet, wobei die Streuschnecke den unteren Querbalken des Pendelrahmens bildet. Infolge dieser Maßnahmen können sich die Streuschneckenausleger in gewissen Grenzen unabhängig gegenüber dem Rahmen bzw. Fahrwerk des Großflächendüngerstreuers bewegen, so daß die Streuschneckenausleger stets parallel zur Bodenoberfläche geführt werden. Die Anordnung der Pendelachse oberhalb der Streuschnecke wirkt sich günstig auf die exakte Streuauslegerführung während des Streuvorganges aus. Eine kompakte und äußerst einfache Bauweise des Pendelrahmens wird dadurch erreicht, daß die Streuschnecke den unteren Querbalken des Pendelrahmens bildet. Hierbei können die Spannelemente als oberhalb des Streuauslegers angeordnete Fachwerkträger ausgebildet sein, wodurch besonders stabile Streuschneckenausleger geschaffen werden. Wenn die Spannelemente längeneinstellbar ausgebildet sind, lassen sich die jeweiligen Streuschneckenauslegerabschnitte in einfacher Weise parallel zur Bodenoberfläche einstellen. Um die während des Streuvorganges durch die Bodenunebenheiten hervorgerufenen Erschütterungen des Fahrwerkes nicht auf die Streuschneckenausleger zu übertragen, können sowohl in den Spannelementen als auch zwischen dem Pendelrahmen und dem Rahmen des Streuers Feder- und/oder Dämpfungselemente angeordnet sein. Zum einfachen Überführen der Streuschneckenausleger von der Arbeits- in die Transportstellung - in der sich die Ausleger schräg nach hinten oben erstrecken - werden diese jeweils an den Vorratsbehälter seitlich herangeklappt. Hierzu sind die Streuschneckenausleger jeweils mittels Gelenke an dem Pendelrahmen angeordnet, deren Gelenkachsen aufrecht, vorzugsweise schräg nach seitlich außen und oben gerichtet sind.

In einer weiteren Ausführungsform ist in vorgesehen, daß die Höhenlage der Streuschneckenausleger mittels Hubvorrichtungen veränderbar ist, daß die Streuausleger bis oberhalb der Laufräder anhebbar sind, so daß sich die Streuausleger während ihrer annähernd waagerechten Transportstellung jeweils oberhalb der Laufräder befinden und an dem Vorratsbehälter angelegt sind. Infolge dieser Maßnahme lassen sich Streuschneckenausleger, die über senkrecht angeordnete Gelenke an dem Pendelrahmen angeordnet sind, sehr einfach bis über die Laufräder des Großflächendüngerstreuers anheben, so daß die einzelnen Streuschneckenausleger im eingeklappten Zustand sehr dicht am Vorratsbehälter anliegen.

Weitere Einzelheiten der Erfindung sind der Beispielsbeschreibung und den Zeichnungen zu entnehmen. Hierbei zeigen

Fig. 1  den in erfindungsgemäßer Weise ausgerüsteten Großflächendüngerstreuers in der Ansicht von vorne, wobei der Rahmen durchgetrennt und die Zugdeichsel entfernt ist in Prinzipdarstellung

Fig. 2  Großflächendüngerstreuer gemäß Fig. 1 in Teilansicht und vergrößertem Maßstab,

Fig. 3  eine andere Ausführungsform des in erfindungs-gemäßer Weise ausgerüsteten Großflächendüngersteuers,

Fig. 4  eine erfindungsgemäß ausgebildete Verteilmaschine in der Seitenansicht,

Fig. 5  die Anordnung des Verteilergestänges an dem Rahmen der Verteilmaschine in der Ansicht VII - VII,

Fig. 6  die Anordnung des Verteilergestänges an dem Rahmen der Verteilmaschine in der Ansicht VIII - VIII,

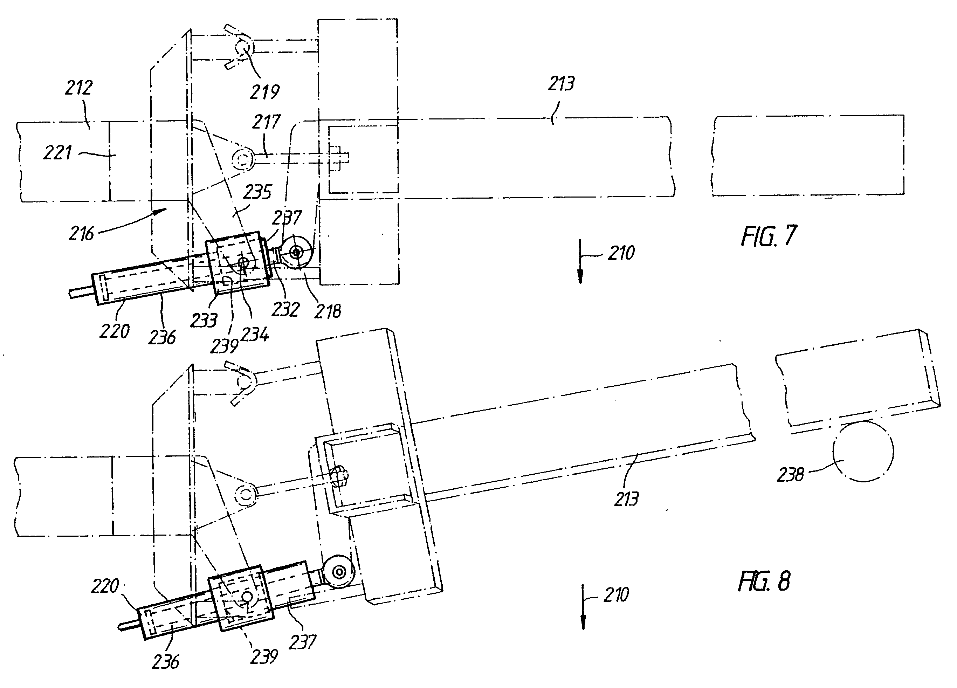

Fig. 7  die Anordnung und Ausbildung des die Ausleger des Verteilergestänges einklappenden Hydraulikzylinders in Prinzipdarstellung und Draufsicht und

Fig. 8  die Ausbildung des Hydraulikzylinders und die Funktionsweise, wenn der Ausleger des Verteilergestänges an ein Hindernis anstößt, in Prinzipdarstellung und in der Draufsicht.

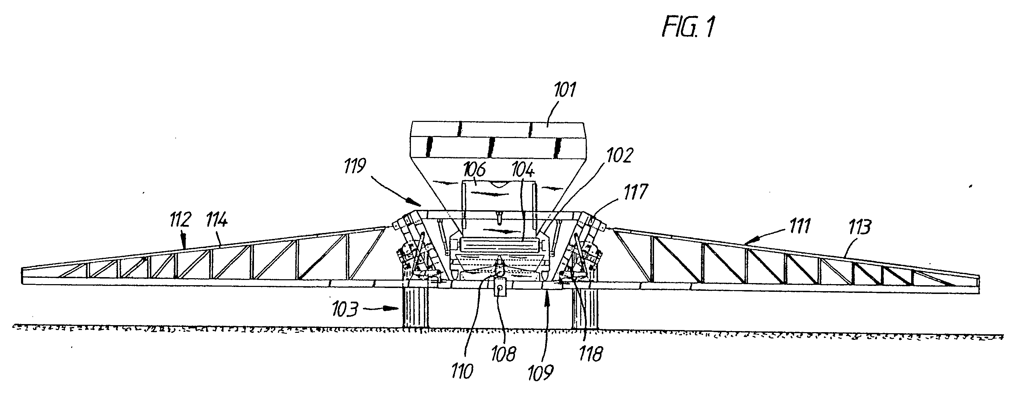

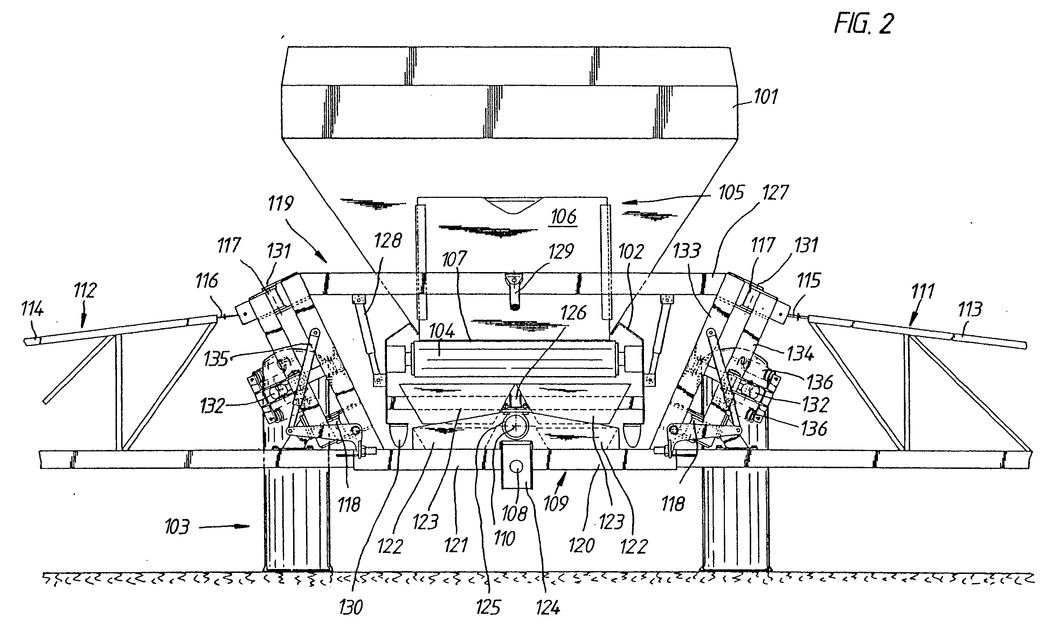

Der Großflächendüngerstreuer gemäß Fig. 1 und 2 ist mit einem Vorratsbehälter 101, einem Rahmen 102 und einem Fahrwerk 103 ausgestattet. In dem unteren Bereich des Vorratbehälters 101 befindet sich das antreibbare und als Förderband 104 ausgebildete Förderorgan. In dem vorderen Bereich 105 des Vorratsbehälters 101 ist die über den Schieber 106 einstellbare Austrittsöffnung 107 angeordnet. Das Förderband 104 wird in bekannter und daher nicht näher dargestellter Weise von der Schlepperzapfwelle über die Antriebswelle 108 angetrieben.

Im Bereich der Austrittsöffnung 107 des Vorratsbehälters 101 ist das als Schneckenstreuwerk 109 ausgebildete Streuorgan um die in Fahrtrichtung verlaufende Achse 110 pendelnd aufgehängt. Das Streuschneckenwerk 109 besteht aus den beiden Streuschneckenauslegern 111 und 112. Diese Streuschneckenausleger 111 und 112 weisen die als Fachwerkträger ausgebildeten Spannelemente 113 und 114 mit den Spannvorrichtungen 115 und 116 auf. Die als Fachwerkträger ausgebildeten Spannelemente 113 und 114 befinden sich oberhalb des Streuschneckenstreuwerkes 109 der jeweiligen Streuschneckenausleger 111 und 112. Über die Gelenke 117 und 118 sind die jeweiligen Streuschneckenausleger 111 und 112 gelenkig mit dem Pendelrahmen 119 verbunden. Der untere Querbalken 120 des Pendelrahmens 119 wird von dem mittleren Teil 121 des Schneckenstreuwerkes 109 gebildet. Der mittlere Streuschneckenteil 121 weist die trichterförmigen Leitorgane 122 auf, über die die aus dem Vorratsbehälter 101 mittels des Förderbandes 104 geförderten Düngemittel über die Rutschen 123 dem Schneckenstreuwerk 109 zugeführt werden. Das Schneckenstreuwerk 109 wird über das Getriebe 124 mittels der Antriebswelle 108 in bekannter Weise von der Schlepperzapfwelle angetrieben. Die Pendelachse 110 des Pendelrahmens 119 ist über die Lagerung 125 drehbar an der Konsole 126, die wiederum an dem Rahmen 102 des Großflächendüngerstreuers angeschweißt ist, befestigt.

Zwischen dem Rahmen 102 und der oberen Querstrebe 127 sind die als Stoßdämpfer ausgebildeten Dämpfungselemente 128 angeordnet. Des weiteren ist zwischen der oberen Querstrebe 127 des Pendelrahmens 119 und dem Rahmen 102 des Streuers ein in Fahrtrichtung weisendes Abstützelement 129 angeordnet. Dieses Abstützelement 129 stützt sich rahmenseitig auf der nicht dargestellten Zugdeichsel ab. Zur Begrenzung der Pendelbewegung des an dem Pendelrahmens 119 angeordneten Schneckenstreuwerkes 109 sind noch die am Rahmen 102 des Großflächendüngerstreuers angeordneten Schwingmetallpuffer 130 befestigt.

Die Gelenke 117 und 118, mit denen die Streuschneckenausleger 111 und 112 an dem Pendelrahmen 119 drehbar befestigt sind, weisen jeweils die schräg nach seitlich außen und oben gerichtete Gelenkachse 131 auf. Mittels des Hydraulikzylinders 132, der zwischen der schräg nach außenoben verlaufenden Tragstütze Träger 133 des Pendelrahmens 119 und der parallelen Tragstütze 134 des jeweiligen Streuschneckenauslegers 111 oder 112 angeordnet ist, lassen sich die jeweiligen Streuschneckenausleger 111 und 112 von der in den Fig. 1 und 2 wiedergegebenen Arbeitsstellung in eine Transportstellung überführen, in der sich die jeweiligen Streuschneckenausleger 111 und 112 in einer schräg nach hinten - oben verlaufenden Position befinden und an den Vorratsbehälter 101 herangeklappt sind. Um die Streuschneckenausleger 111 und 112 beim Überführen von der Transportstellung in die Arbeitsstellung vor Beschädigungen zu schützen, d.h. um ein sanftes Ausklappen der Streuschneckenausleger 111 und 112 herbeizuführen, sind noch die Dämpfungselemente 135 und die Federelemente 136 zwischen dem Pendelrahmen 119 und dem jeweiligen Streuschneckenausleger 111 bzw. 112 angeordnet.

Die Montage bzw. Demontage des Pendelrahmens 119 von dem Rahmen 102 des Großflächendüngerstreuers läßt sich auf einfachste Weise durchführen, wobei hier nur die zwischen dem Rahmen 102 und dem Pendelrahmen 119 angeordneten Dämpfungselemente 128 bzw. das Abstützelement 129 entfernt werden und nach Lösen der Lagerungen 125 von der Konsole 126 der Pendelrahmen 119 nach vorne über die Zugdeichsel abgenommen werden kann.

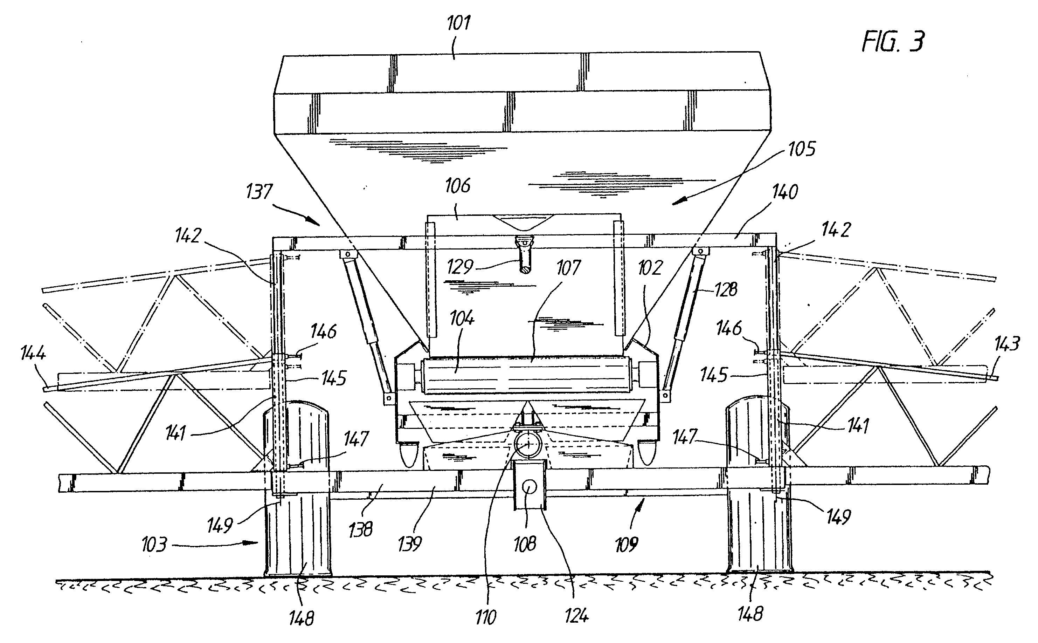

Die Fig. 3 zeigt einen Großflächendüngerstreuer der sich nur durch einen andersartig ausgebildeten Pendelrahmen 137 von dem Großflächendüngerstreuer gemäß den Fig. 1 und 2 unterscheidet. Die untere Querstrebe 138 des Pendelrahmens 137 wird auch hier von dem mittleren Teil 139 des Streuschneckenwerkes 109 gebildet. Die Verbindung zwischen der unteren Querstrebe 138 und der oberen Querstrebe 140 des Pendelrahmens 137 wird von den als Tragstützen ausgebildeten, senkrecht angeordneten Hydraulikzylindern 141 gebildet. Hierbei ist die Kolbenstange 142 des Hydraulikzylinders 141 unmittelbar zwischen der oberen Querstrebe 140 und der unteren Querstrebe 138 befestigt. Die Streuschneckenausleger 143 und 144 sind hier unmittelbar an dem Zylindermantel 145 des

Hydraulikzylinders 141 befestigt. Sollen die Streuschneckenausleger 143 und 144 nun in Transportstellung verschwenkt werden, müssen die doppeltwirkenden Hydraulikzylinder 141 über die Hydraulikleitung 146 mit Drucköl beaufschlagt werden, so daß der Zylindermantel 145 entlang der Kolbenstange 142 nach oben fährt und so zu einer Hubvorrichtung für die jeweiligen Streuschneckenausleger 143 und 144 wird. Danach lassen sich die Streuschneckenausleger 143 und 144 in eine Transportstellung dicht an den Vorratsbehälter 101 herausklappen. Sollen die Streuschneckenausleger 143 bzw. 144 wieder abgesenkt werden, wird der Hydraulikzylinder 141 über die Hydraulikleitung 147 mit Drucköl beaufschlagt. Um die jeweiligen Streuschneckenausleger 143 bzw. 144 in gewünschter Weise in die Transportstellung zu Überführen, in der sich jeweiligen Streuschneckenausleger 143 und 144 dicht neben dem Vorratsbehälter 101 des Großflächendüngerstreuers befinden, ist es notwendig, die jeweiligen Streuschneckenausleger 143 bzw. 144 bis oberhalb der Laufräder 148 anzuheben. Die Kolbenstange 142 bildet gleichzeitig die Schwenkachse 149 der Streuschneckenausleger 143 bzw. 144, um die die Ausleger 143 bzw. 144 um 90° verschwenkbar sind.

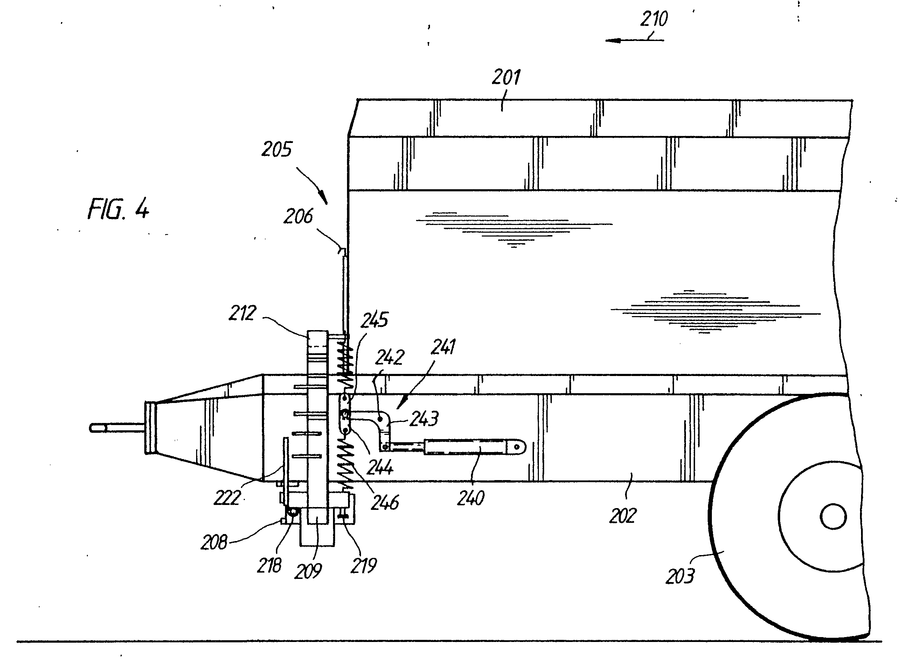

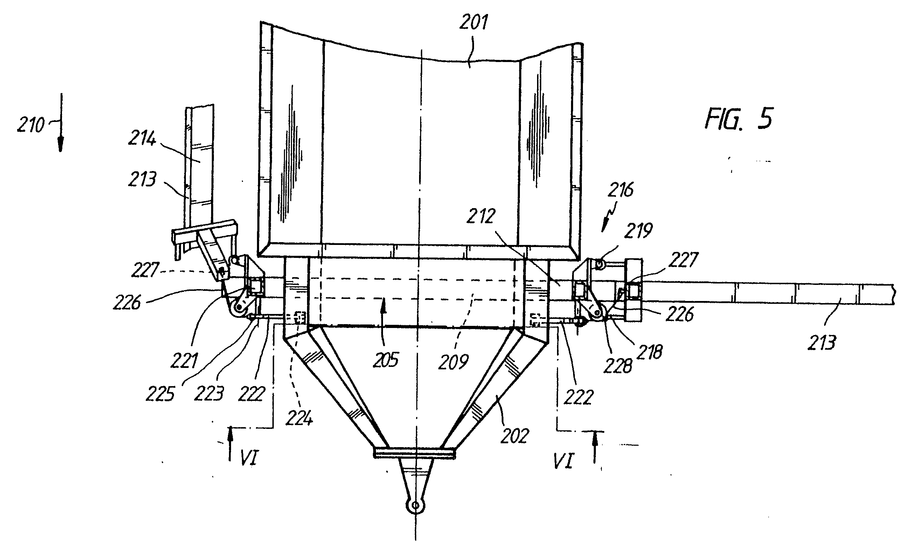

Die Verteilmaschine gemäß Fig. 4 bis 6 ist beispielsweise als Großflächendüngerstreuer ausgebildet und mit einem Vorratsbehälter 201, einem Rahmen 202 und einem Fahrwerk 203 ausgestattet. In dem unteren Bereich des Vorratsbehälters 201 befindet sich das antreibbare und als Förderband ausgebildete Förderorgan 204. In dem vorderen Bereich 205 des Vorratsbehälters 201 ist die über den Schieber 206 einstellbare Austrittsöffnung 207 angebracht.

Das Förderband 204 ist vorzugsweise in zwei entgegengesetzte Förderrichtungen antreibbar. Dieses Förderband 204 wird von der Schlepperzapfwelle über die Antriesbwelle 208 angetrieben.

Des weiteren weist der Vorratsbehälter 201 eine in seinem hinteren Bereich angeordnete weitere Austrittsöffnung auf, unterhalb der ein als Zentrifugalstreuwerk ausgebildetes Streuorgan abnehmbar angeordnet ist.

Im Bereich der vorderen Austrittsöffnung 207 des Vorratsbehälters 201 ist das als Schneckenstreuwerk 209 ausgebildete Streuorgan um die in Fahrtrichtung 210 verlaufende Achse 211 pendelnd an dem Pendelrahmen 212 angeordnet. Die sich seitlich neben dem Vorratsbehälter 201 des Großflächendüngerstreuers und über die gesamte Arbeitsbreite der Verteilmaschine erstreckenden Streuschneckenausleger 213 sind ebenfalls an dem Pendelrahmen 212 befestigt. In der Transportstellung 214 befinden sich die Streuschneckenausleger 213 in nach hinten-oben ragender Position, wobei die hinteren Enden der Ausleger 213 in die sich am Vorratsbehälter 201 befindlichen Fang- und Arretierungsvorrichtungen 215 fassen, so daß die Streuschneckenausleger 213 während des Transportes fest arretiert sind, wie dieses in Fig. 1 für den in Fahrtrichtung gesehen rechten Ausleger dargestellt ist. Der link Ausleger ist in Arbeitsstelung dargestellt.

Die Ausleger 213 sind über die Dreigelenkabstützung 216 am Pendelrahmen 212 angelenkt. Die Dreigelenkabstützung 216 weist den oberen Anlenkpunkt 217 und die beiden unteren Anlenkpunkte 218 und 219 auf. Die Lage der beiden Anlenkpunkte 218 und besonders 219 am Ausleger sowie am Pendelrahmen ist veränderbar, so daß sich verschiedene Dreigelenkabstützungen ergeben, damit man verschieden schräge Lagen der Ausleger in ihrer Transportstellung erreichen kann. Hierdurch ist es möglich, die Ausleger nur so hoch wie ebene erforderlich schräg zu stellen, daß sie gerade über di Reifen sich in Transportstellung befinden.

Über den einfach wirkenden Hydraulikzylinder 220 lassen sich die jeweiligen Ausleger 213 in die Transportstellung 214 überführen, wobei eine gedachte Verbindungslinie zwischen dem oberen Anlenkpunkt 217 und dem unteren Anlenkpunkt 219 der Dreigelenkabstützung 216 eine schräge Schwenkachse bildet.

An den beiden aufrechten Trägern 221 des Pendelrahmens 212 ist jeweils ein Kipphebel 222 drehbar gelagert, der jeweils um die in Fahrtrichtung 210 verlaufende Befestigungsachse 223 schwenkbar ist. Der untere Abschnitt 224 des Kipphebels 222 wirkt mit dem Rahmen 202 des Großflächendüngerstreuers zusammen, wobei am aufrechten Hebelarm 225 des Kipphebels 222 ein als Seil 226 ausgebildetes Zugelement angreift. Dieses Zugelement 226 ist an seinem anderen Ende in der an dem Streuschneckenausleger 213 angeschweißten Befestigungsöse 227 befestigt. Zwischen den beiden Anlenkpunkten des Zugelementes 226 ist im Bereich des Seiles 226 und in einem Abstand von dem jeweiligen Gelenk 219, um welches die Ausleger 213 einklappbar sind, ein als Umlenkrolle 228 ausgebildetes Umlenkelement angeordnet.

Um ein exaktes Pendeln des Pendelrahmens 212 zu gewährleisten weist der Pendelrahmen 212 die beiden U-förmigen Führungsschienen 230 auf, in denen die Führungsrollen 230, die über die Halterungen 231 mit dem Rahmen 202 des Großflächendüngerstreuers verbunden sind, sich bewegen.

Soll nun einer der beiden Ausleger 213 von der Arbeits-in die Transportstellung 214 überführt werden, wird der Hydraulikzylinder 220 mit Hydrauliköl beaufschlagt. Dies hat zur Folge, daß die Kolbenstange 232 ausfährt und der Ausleger 213 um die gedachte, durch die Anlenkpunkte 217 und 219 der Dreigelenkabstützung 216 verlaufende schräge Schwenkachse verschwenkt wird. Dieses Verschwenken des Streuauslegers 213 führt dazu, daß der Kipphebel 222 vom Zugelement 226, welches von der ein einem Abstand zu der gedachten Schwenkachse angeordneten Umlenkrolle 227 umgelenkt wird. Dieses Sannen des Seiles 226 führt zu einer Kippbewegung des Kipphebels 222, wobei der aufrechte Hebelarm 225 quer zur Fahrtrichtung 210 in Richtung auf die Umlenkrolle 228 verschwenkt wird. Dadurch, daß der Hebelarm 225 in Richtung auf die Umlenkrolle 228 um die Kipphebelbefestigungswelle 223 verschwenkt wird, wirkt der untere Abschnitt 224 des Kipphelbs 222 mit dem Rahmen 202 des Großflächendüngerstreuers zusammen. Dieses hat zur Folge, daß der durch das einseitige Einklappen des Streugutauslegers 213 um die Pendelachse 211 verschwenkte Pendelrahmen 212 wieder parallel zu dem Rahmen 202 des Großflächendüngerstreuers zurückgeführt wird. Dadurch, daß durch die Schwenkbewegung des jeweiligen Auslegers 213 ein Spannen des Seiles 226 erfolgt, wird automatisch eine Steuerung des Kipphebels 222 hervorgerufen, der sich dann unter dem Rahmen 202 des Großflächendüngerstreuers abstützt und dadurch den Pendelrahmen des Streuschneckenwertes 209 wieder geradestellt bzw. parallel zum Rahmen 202 des Großflächendüngerstreuers. Dadurch, daß der Pendelrahmen 212 bei einem Einschwenken der Streugutausleger 213 über die Kipphebel 222 wieder in die parallele Lage zum Rahmen 202 des Großflächendüngerstreuers zurückgeführt wird, können die hinteren Enden der Streugutausleger 213 Streutgutauslegern beim Einklappen des Verteilergestänges 213 in die wirksam werdenden Verriegelungselemente 215 automatisch einrasten.

Sollen nun die Ausleger 213 von der Transportstellung 214 in die Arbeitsstellung geschwenkt werden, so ist zunächst die Arretierung der Verriegelungselemente 215 zu lösen und die sich schräg nach hinten-oben befindlichen Ausleger 213 schwenken gleichzeitig und selbstverständlich ohne fremde Krafteinwirkung von der Transportstellung 214 in die Arbeitsstellung. Steht nun aber der Großflächendüngerstreuer quer zum Hang, dann schwenkt zunächst aufgrund der wirkenden Schwerkraft nur der hangabwärts gerichtete Streuausleger von seiner Transport-in die Arbeitsstellung und der hangaufwärts gerichtete Ausleger verbleibt zunächst in der Arretierung, da er sich nach oben, entgegen der Schwerkraft, bewegen müßte. Da nun aber im eingeklappten Zustand beider Streugutausleger 213 die unteren Abschnitt 224 der jeweiligen Kipphebel 222 mit dem Rahmen 202 des Großflächendüngerstreuers zusammenwirken, wird nun durch das Ausschwenken des hangabwärts gerichteten Auslegers zunächst ein Verschwenken des Pendelrahmens 212 durch den Kipphebel 222 des hangaufwärts sich befindlichen Auslegers und zwar auf der hangabwärtigen nach unten und auf der hangaufwärtigen nach oben hervorgerufen. D.h., dieses Verschwenken des Pendelrahmens 212, das durch das Kräfteungleichgewicht durch die unterschiedlichen Lagen der Streugutausleger 213 hervorgerufen wird, wird eine Kraft vom Rahmen 202 des Großflächendüngerstreuers auf den unteren Bereich 224 des Kipphebels 222 des sich hangaufwärts befindlichen auslegers ausgeübt, die dazu führt, daß der obere Hebelarm 225 des Kipphebels 222 eine in Richtung auf die Pendelachse 211 gerichtete Schwenkbewegung um die Kipphebeldrehachse 223 hervorruft. Hierdurch wird das um die Umlenkrolle 228 geführte Seil 226 gespannt, so daß der hangaufwärts gerichtete Streugutausleger 213 aus dem Verriegelungselement 215 herausgezogen wird, so daß auch der hangaufwärts gerichtete Streugutausleger in seine Arbeitsstellung schwenken kann. Der hangaufwärts sich befindliche Ausleger also wird mit einer geringen Zeitverzögerung ausgeklappt, nach dem er automatisch von hangabwärts sich befindlichen Auslegern aus der Arretierungsvorrichtung 215 herausgezogen worden ist. Nachdem der hangaufwärts gerichtete Ausleger sich aus der Arretierung 215 gelöst hat, schwenkt der Ausleger aufgrund seiner schrägen Schwenkachse in die Arbeitsstellung, so daß auch hier ein Verschwenken der Ausleger von der Transport- in die Arbeitsstellung ohne fremde Krafteinwirkung erfolgt.

Des weiteren sind Ausleger 213 in einer Dreigelenkabstützung 216 an dem Pendelrahmen 212 aufgehängt, um einen Gegenfahrschutz zu gewährleisten. D.h., wenn der Ausleger 213 auf ein Hindernis auftrifft, hat er die Möglichkeit, sich ungehindert aus der Dreigelenkabstützung 216 zu lösen. Um ein ungehindertes Lösen des jeweiligen, auf ein Hindernis auftreffenden Auslegers 213 aus der Dreigelenkabstützung 216 zu ermöglichen, ist der für das Einklappen des Verteilergestänges 213 aus der Arbeits- in die Transportstellung notwendige Hydraulikzylinder 220 in einer Schiebeführung 233 gelagert. Weicht nun ein Ausleger 213 einem Hindernis aus, so wird der Zylinder 220 aus dieser Schiebeführung 233 herausgezogen, ohne den Ausleger 213 festzuhalten, wodurch verhindert wird, daß ein Vakuum im Zylinder 220 entsteht bzw. Luft in das Hydrauliksystem gelangen kann. Diese Schiebeführung 233 ist schwenkbar über die Befestigungszapfen 234 an den Haltearmen 235 befestigt. Die Haltearme 235 wiederum sind an dem Pendelrahmen 212 angeschweißt. Die Schiebeführung 233 weist zwei unterschiedlich große Bohrungen auf, die dem jeweiligen Durchmesser der Bauteile 236 und 237 des Hydraulikzylinders 220 entsprechen. Trifft nun ein Ausleger 213 auf ein Hindernis 238 gemäß Fig. 10, wird der Hydraulikzylinder 220 aus der Schiebeführung 233 herausgezogen, wodurch der Ausleger 213 ungehindert dem Hindernis 238 ausweichen kann. Der Ausleger 213 wird also nicht vom Hydraulikzylinder 220 festgehalten.

Soll nun der jeweiligen Ausleger 213 in die Transportstellung 214 überführt werden, wird der Hydraulikzylinder 220 mit Drucköl beaufschlagt, so daß die Kolbenstange 232 ausfährt und der Ausleger 213 um den Drehpunkt 219 verschwenkt wird. Beim Beaufschlagen des Hydraulikzylinders 220 mit Drucköl stützt sich dieser mit dem größeren Durchmesser des Bauteiles 237 an der Kante 239 der Schiebeführung 233 ab, so daß das Gestänge 213 in gewünschter Weise in die Transportstellung 214 überführt wird.

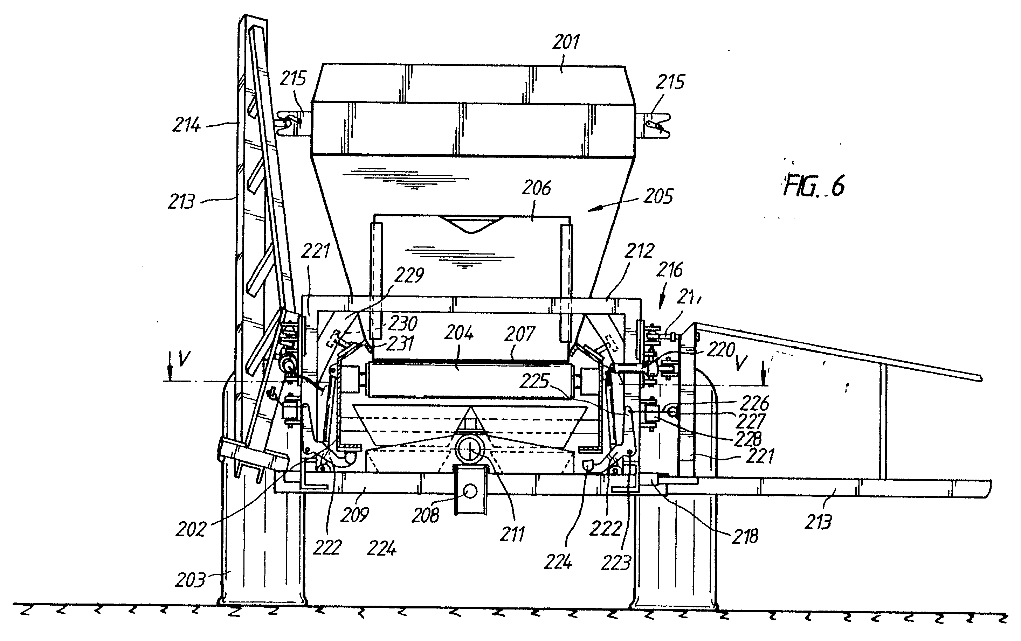

Des weiteren ist der Pendelrahmen 212 mit einer über einen hydraulischen Zylinder 240 betätigbaren Hangausgleichssteuerung 241 ausgestattet. Diese Hangausgleichssteuerung 241 weist den am Rahmen 202 angelenkten Hydraulikzylinder 240 auf, der an einem um den Drehpunkt 242 drehbar gelagerten Stellhebel 243 angreift. An diesem Stellhebel 243 sind die beiden Anlenkhebel 244 und 245 beweglich angelenkt, wobei sich an diesen Anlenkhebeln 244 und 245 die Zugfedern 246 anschließen, die an ihrem anderen Ende mit dem Pendelrahmen 212 verbunden sind. Wird der Großflächendüngerstreuer auf ebener Bodenoberfläche bewegt, befindet sich die Hangausgleichssteuerung 241 in der Normalstellung gemäß Fig. 6, da sich das Verteilergestänge 213, welches in Fig. 6 der Übersicht halber nicht dargestellt ist, immer parallel zum Rahmen 202 des Großflächendüngerstreuers einstellt. Befindet sich nun der Rahmen 202 des Großfächendüngerstreuers nicht parallel zur Bodenoberfläche, d.h., wenn beispielsweise ein Laufrad in einer Erdfurche läuft, so daß sich der Rahmen 202 schräg gegenüber der Bodenoberfläche bewegt, ist es nun notwendig, daß sich die parallel zum Rahmen 202 geführten Ausleger 213 entsprechend der Neigung des Rahmens 202 gegenüber der Bodenoberfläche zu verschwenken, so daß die Ausleger 213 wieder parallel zur Bodenoberfläche geführt werden. Dieses Verschwenken der Ausleger 213 erfolgt über den Hydraulikzylinder 240 der Hangausgleichssteuerung 241, in dem dieser Hydraulikzylinder 240 entweder ein- oder ausgefahren wird. Dieses Ein- oder Ausfahren des Hydraulikzylinders 240 bewirkt, daß der Pendelrahmen 212 um die Pendelachse 211 in die eine oder andere Richtung verschwenkt wird, so daß die Ausleger 213 wieder parallel zur Bodenoberfläche und nicht parallel zum Rahmen 202 des Streuers geführt werden. Die Hangausgleichssteuerung 241 und das Ansprechverhalten der Kipphebel 222 ist derart aufeinander abgestimmt, daß beim Betätigen der Hangausgleichssteuerung 241 diese Kipphebel 222 noch nicht ansprechen, d.h., daß das Zugelement 226 noch nicht gespannt wird und die Kipphebel 222 in ungewünschter Weise mit dem Rahmen 202 zusammenwirken.

**Ansprüche**

1. Verteilmaschine mit einem Rahmen (102, 202), einem Vorratsbehälter (101,201) und einem Verteilergestänge (109,209)), dem über eine Fördereinrichtung (104,204) das sich im Vorratsbehälter (101,201) befindliche Material zufürhrbar ist und das sich beidseitig des Vorratsbehälters (101,201) erstreckt, wobei die Ausleger (111,112,213) des Verteilergestänges (109,209) über an ihnen befestigte Spannelemente (113,114) in der Arbeitsstellung gehalten werden, wobei die Spannelemente (113,114) der beiden Ausleger (111,112,213) miteinander verbunden sind, wobei die Ausleger (111,112,213) des Verteilergestänges (109,209) um eine in Fahrtrichtung verlaufende Achse (110,211) pendelnd angehängt sind und die Ausleger (111,112,213) gemeinsam um diese Achse (110,211) pendeln können, wobei ein Pendelrahmen (119,137,212) vorgesehen ist, dadurch gekennzeichnet, daß das Verteilorgan als Streuschnecke (109,209) ausgebildet ist, daß die Streuschnecke (109,209) über Gelenke (117,118) an den Vorratsbehälter (101) in eine Transportstellung seitlich einklappbar ist, daß die Streuschneckenausleger (111,112,143,144,213) an dem Pendelrahmen (119,137,212) angeordnet sind, und daß der Pendelrahmen (119,137,212) eine Öffnung aufweist, durch die der Rahmen (102,202) und/oder die Zugdeichsel des Streuers geführt ist, daß der Pendelrahmen (119,137,212) an dem Rahmen (102,202) Pendelnd gelagertist, und daß sich die Pendelachse (110,211) im unteren Bereich des Pendelrahmens (119,137,212) befindet, daß zwischen der oberen Querstrebe (127,140,229) des Pendelrahmens (119,137,212) und dem Rahmen (102,202) der Verteilmaschine zumindest ein Abstützelement (129,230) in/oder entgegen der Fahrtrichtung angeordnet ist.

2. Verteilmaschine nach Anspruch 1, dadurch gekennzeichnet, daß die Streuschneckenausleger zusätzlich um eine aufrechte Achse schwingend aufgehängt sind.

3. Verteilmaschine nach Anspruch 1 und 2, dadurch gekennzeichnet, daß zwischen dem Rahmen (102) und der Streuschnecke (119,137) Dämpfungs- und/oder Federelemente angeordnet sind.

4. Verteilmaschine nach Anspruch 1, dadurch gekennzeichnet, daß die Streuschnecke federnd am Rahmen aufgehängt ist.

5. Verteilmaschine nach Anspruch 1, dadurch gekennzeichnet, daß die Pendelachse (110,211) sich oberhalb der Streuschnecke (109,209) befindet, wobei die Streuschnecke (109) den unteren Querbalken (120,138) des Pendelrahmens (119,137,212) bildet.

6. Verteilmaschine nach Anspruch 1, dadurch gekennzeichnet, daß die Höhenlage der Streuausleger (143,144) mittels Hubvorrichtungen (141) veränderbar ist, daß die Streuausleger (143,144) bis oberhalb der Laufräder (148) anhebbar sind, so daß sich die Streuausleger (143,144) während ihrer annähernd waagerechten, nach hinten geklappten Transportstellung jeweils oberhalb der Laufräder (148) befinden und an dem Vorratsbehälter (101) angelegt sind.

7. Verteilmaschine nach Anspruch 1, dadurch gekennzeichnet, daß die Ausleger (213) über eine Dreigelenkabstützung (216) an dem Pendelrahmen (212) angeordnet sind.

**Claims**

1. Distributor, including a frame (102, 202), a hopper (101, 201) and a distributor tube assembly (109, 209), to which the material situated in the hopper (101, 201) is suppliable through the intermediary of a conveyor means (104, 204), and which distributor tube assembly extends on both sides of the hopper (101, 201), wherein the booms (111, 112, 213) for the distributor tube assembly (109,209) are retained in their operative position by tension members (113, 114), which are secured to said booms, wherein the tension members (113, 114) of the two booms (111, 112, 213) are interconnected, wherein the booms (111, 112, 213) for the distributor tube assembly (109, 209) are attached so as to oscillate about an axle (110, 211), which extends in the direction of travel, and the booms (111, 112, 213) can jointly oscillate about this axle (110, 211), wherein an oscillatory frame (119, 137, 212) is provided, characterised in that the distributing means is in the form of a dispersing worm (109, 209), in that the dispersing worm (109, 209) is laterally pivotable into a travelling position through the intermediary of pivot joints (117, 118) on the hopper (101), in that the booms (111, 112, 143, 144, 213) for the dispersing worm are disposed on the oscillatory frame (119, 137, 212), and in that the oscillatory frame (119, 137, 212) has an aperture through which the frame (102, 202) and/or the towbar of the dispersing means are or is guided, in that the oscillatory frame (119, 137, 212) is oscillatingly mounted on the frame (102, 202), and in that the oscillatory axle (110, 211) is situated in the lower region of the oscillatory frame (119, 137, 212), in that at least one supporting member (129, 230) in, or in opposition to, the direction of travel is disposed between the upper cross-piece member (127, 140, 229) of the oscillatory frame (119, 137, 212) and the frame (102, 202) of the distributor.

2. Distributor according to claim 1, characterised in that the booms for the dispersing worm are additionally mounted so as to oscillate about a vertical axle.

3. Distributor according to claims 1 and 2, characterised in that damping and/or resilient members are disposed between the frame (102) and the dispersing worm (119, 137).

4. Distributor according to claim 1, characterised in that the dispersing worm is resiliently mounted on the frame.

5. Distributor according to claim 1, characterised in that the oscillatory axle (110, 211) is situated above the dispersing worm (109, 209), wherein the dispersing worm (109) forms the lower cross-beam (120, 138) of the oscillatory frame (119, 137, 212).

6. Distributor according to claim 1, characterised in that the vertical position of the dispersing booms (143, 144) is variable by means of lifting arrangements (141), in that the dispersing booms (143, 144) are raisable to above the running wheels (148), so that the dispersing booms (143, 144) are each situated above the respective running wheels (148) during their approximately horizontal, rearwardly pivoted travelling position and are attached to the hopper (101).

7. Distributor according to claim 1, characterised in that the booms (213) are disposed on the oscillatory frame (212) through the intermediary of a triple-jointed support assembly (216).

## Revendications

1. Distributeur d'engrais comportant un châssis (102, 202) avec un réservoir d'alimentation (101, 201) et une tringlerie de distributeur (109, 209) qui reçoit le produit du réservoir d'alimentation (101, 201) par l'intermédiaire d'un dispositif de transfert (104, 204) et qui s'étend de chaque côté du réservoir (101, 201), les bras (111, 112, 213) de la tringlerie de distributeur (109, 209) étant maintenus en position de travail par des éléments de tension (113, 114) fixés sur cette tringlerie, les éléments de tension (113, 114) des deux bras (111, 112, 213) étant reliés et les bras (111, 112, 213) de la tringlerie de distributeur (109, 209) étant suspendus de manière pendulaire autour d'un axe (110, 211) parallèle à la direction de déplacement, les bras (111, 112, 213) pouvant effectuer des mouvements pendulaires communs autour de cet axe (110, 211), un châssis pendulaire (119, 137, 212) étant prévu, caractérisé en ce que l'organe-distributeur est une vis d'épandage (109, 209) et cette vis (109, 209) peut être rabattue latéralement en position de transport par des articulations (117, 118) prévues sur le réservoir d'alimentation (101), les bras de l'épandeur à vis (111, 112, 143, 144, 213) étant montés sur le châssis pendulaire (119, 137, 212) et ce châssis comporte une ouverture par laquelle passe le châssis (102, 202) et/ou le timon du distributeur, le châssis pendulaire (119, 137, 212) étant articulé de manière pendulaire sur le châssis (102, 202) du distributeur pour que l'axe du mouvement pendulaire (110, 211) se trouve dans la zone inférieure du châssis pendulaire (119, 137, 212) et en ce qu'entre la traverse supérieure (127, 110, 229) du châssis pendulaire (119, 137, 212) et le châssis (102, 202) du distributeur, il soit prévu au moins un élément d'appui (129, 230) et/ou dans la direction opposée à la direction de déplacement.

2. Distributeur selon la revendication 1, caractérisé en ce que les bras de la vis d'épandage sont en outre suspendus de manière oscillante autour d'un axe montant.

3. Distributeur selon les revendications 1 et 2, caractérisé en ce que des éléments d'amortissement et/ou de suspension sont prévus entre le châssis (102) et la vis d'épandage (119, 137).

4. Distributeur selon la revendication 1, caractérisé en ce que la vis d'épandage est suspendue élastiquement au châssis.

5. Distributeur selon la revendication 1, caractérisé en ce que l'axe pendulaire (110, 211) se trouve au-dessus de la vis d'épandage (109, 209) et la vis d'épandage (109) forme la traverse inférieure (120, 138) du châssis pendulaire (119, 137, 212).

6. Distributeur selon la revendication 1, caractérisé en ce que la position en hauteur des bras (143, 144) peut être modifiée par des dispositifs de levage (141) et ces bras (143, 144) peuvent être soulevés jusqu'au-dessus des roues de roulement (148) pour que les bras de distributeur (143, 144) puissent être basculés de leur position pratiquement horizontale, vers l'arrière en position de transport, se trouvant chaque fois au-dessus des roues de roulement (148) pour venir contre le réservoir d'alimentation (101).  ·

7. Distributeur selon la revendication 1, caractérisé en ce que les bras (213) sont prévus sur un châssis pendulaire (212) par l'intermédiaire d'un appui à trois articulations (216).

FIG. 1

FIG. 2

EP 0 269 829 B1

FIG. 3

EP 0 269 829 B1

FIG. 4

FIG. 5

EP 0 269 829 B1

FIG. 6

EP 0 269 829 B1

FIG. 7

FIG. 8

EP 0 269 829 B1